# EUROPEAN PATENT APPLICATION

(11) **EP 3 179 295 A1**
(43) Date of publication of application: **14.06.2017**
(21) Application number: 15829454.6
(22) Date of filing: 06.08.2015
(51) Int. Cl.: G02C 7/12, C08G 18/38, C08G 18/75, C08J 7/04, G02B 1/04, G02B 1/14, G02B 5/30

(54) **PLASTIC POLARIZING LENS AND PRODUCTION METHOD THEREFOR**

(30) Priority: 07.08.2014 JP 2014161312
(71) Applicant: Mitsui Chemicals, Inc., Tokyo 105-7117 (JP); Hopnic Laboratory Co., Ltd., Sbae-shi Fukui 916-0073 (JP)
(72) Inventor: MIURA Toru, Tokyo 105-7117 (JP); AKUTSU Norihiko, Sabae-shi Fukui 916-0073 (JP)
(74) Representative: Wills, Andrew Jonathan
(86) International application number: PCT/JP2015/072331
(87) International publication number: WO 2016/021679

(57) **Abstract**

Disclosed is a plastic polarized lens including a polarized film, and a base layer formed over at least one surface of the polarized film. The base layer is comprised of a (thio) urethane resin obtained by polymerizing and curing a polymerizable composition containing at least one kind of isocyanate selected from isophorone diisocyanate, bis(isocyanate cyclohexyl) methane, and bis(isocyanate methyl) cyclohexane, and an active hydrogen compound.

## Description

### TECHNICAL FIELD

The present invention relates to a plastic polarized lens and a process for producing same.

### BACKGROUND ART

A polarized lens is able to prevent reflected light from being transmitted. For this reason, a polarized lens is used for protecting the eyes by shielding intense reflected light in the outdoors such as in skiing areas or fishing areas, for ensuring safety by shielding reflected light from an oncoming vehicle at the time of driving an automobile, and the like.

In Patent Document 1, a process for producing a polarized lens having a high refractive index is disclosed, in which a step of forming a lens layer which is comprised of a polyurethane-based polymer comprised of polyisocyanate and polythiol on both surfaces of a polarized film having specific moisture content is included.

In Patent Document 2, a plastic polarized lens and a producing method thereof are disclosed, in which a layer comprised of a thiourethane-based resin which is obtained by a reaction between an isocyanate compound and an active hydrogen compound such as a thiol compound is laminated on both surfaces of a polarized film comprised of thermoplastic polyester. In addition, disposing a hard coat layer is disclosed.

In Patent Document 3, a process for producing a polarized lens is disclosed, in which a molded product obtained by heating a thermosetting component at a predetermined temperature condition is laminated on a polarized film. In addition, disposing a hard coat layer is disclosed. In addition, it is disclosed that astigmatism which is unnecessary for correction of a spectacle lens is reduced, and a high-quality polarized lens is able to be obtained.

In Patent Document 4, a process for producing a polarized lens containing a buried polarized film is disclosed, in which a polarized film which has been subjected to curved-surface machining is subjected to a heat treatment at a temperature of 105°C or higher and lower than 150°C, and then, a curable composition is cured on both surfaces of the polarized film. It is disclosed that a polarized lens having small astigmatism is able to be obtained according to the method. Furthermore, in an example, it is disclosed that a polarized lens comprised of a resin obtained by polymerizing and curing m-xylylene diisocyanate and 4,8-dimercaptomethyl-1,11-dimercapto-3,6,9-trithiaundecane, and a polyvinyl alcohol polarized film is produced, a hard coat layer is formed by applying a coating liquid onto the surface of the polarized lens and by calcining at 130°C for 120 minutes(paragraph 0097).

In examples of Patent Documents 5 to 7, a plastic lens obtained by polymerizing and curing isophorone diisocyanate and 4-mercaptomethyl-1,8-dimercapto-3,6-dithiaoctane is disclosed.

### RELATED DOCUMENT

### PATENT DOCUMENT

[Patent Document 1] WO2004/099859
[Patent Document 2] WO2008/018168
[Patent Document 3] Japanese Laid-open Patent Publication No. 2011-033831
[Patent Document 4] WO2014/021466
[Patent Document 5] Japanese Laid-open Patent Publication No. H2-270859
[Patent Document 6] Japanese Laid-open Patent Publication No. H7-118357
[Patent Document 7] Japanese Laid-open Patent Publication No. H7-247335

### SUMMARY OF THE INVENTION

Technologies disclosed in the patent documents described above have the following problems.

In Patent Documents 1 and 2, an influence on physical properties by heat in a process step is not considered, and thus, there is a case where astigmatism occurs.

In the producing method of Patent Document 3, it is difficult to perform temperature management at the time of preparing the molded product in a complicated temperature profile, and thus, there is a case where astigmatism occurs, and a yield of products decreases. In the producing method of Patent Document 4, a step of performing the heat treatment with respect to the polarized film which has been subjected to the curved-surface machining at a temperature of 105°C or higher and lower than 150°C is additionally required, and thus, the step becomes complicated, and there is a room for improvement from the viewpoint of high production costs. Furthermore, a combination of the polymerizable compounds configuring the base layer is not considered.

In general, a plastic lens is produced by polymerizing a composition in a mold, releasing an obtained molded product from the mold, and then forming a hard coat onto the molded product to applying abrasion resistance, and is used. In Patent Documents 3 and 4, astigmatism of a lens obtained by releasing from the mold, that is, astigmatism of a lens before being subjected to hard coat treatment is considered, but astigmatism of a lens after being subjected to a hard coat treatment is not considered.

The present inventors have performed various studies regarding a room for improvement of the related art, and thus, findings have been obtained, that in a plastic polarized lens, there is a case where astigmatism occurs even in a heat treatment step such as a hard coat treatment on molded product after polymerization and release. Further, the present inventors have found that in a plastic polarized lens in which a hard coat layer is disposed, there is a room for improvement in adhesiveness between the hard coat layer and the lens base layer.

The present inventors have found that a resin obtained by a combination between specific isocyanate and an active hydrogen compound has excellent heat resistance, astigmatism is suppressed not only at a heating temperature at the step of molding but also in a heat treatment step after being molded, and adhesiveness between a hard coat layer and a lens base layer is also excellent, and thus have completed the present invention.

The present invention is able to be described as follows.

[1] A plastic polarized lens, including a polarized film; and a base layer formed over at least one surface of the polarized film, in which the base layer is comprised of a (thio) urethane resin obtained from at least one kind of isocyanate selected from isophorone diisocyanate, bis(isocyanate cyclohexyl) methane, and bis (isocyanate methyl) cyclohexane, and an active hydrogen compound.
[2] The plastic polarized lens according to [1], in which the active hydrogen compound is polyol or polythiol.
[3] The plastic polarized lens according to [2], in which the polythiol is 4-mercaptomethyl-1,8-dimercapto-3,6-dithiaoctane.
[4] The plastic polarized lens according to any one of [1] to [3], in which the isocyanate contains isophorone diisocyanate.
[5] The plastic polarized lens according to any one of [1] to [4], further including: at least one kind of coat layers over the base layer.
[6] The plastic polarized lens according to [5], in which at least one kind of the coat layer is a hard coat layer.
[7] The plastic polarized lens according to any one of [1] to [6], in which astigmatism thereof is 0.05 D or less.
[8] A process for producing a plastic polarized lens, comprising: a step of preparing a polymerizable composition containing at least one kind of isocyanate selected from isophorone diisocyanate, bis(isocyanate cyclohexyl) methane, and bis (isocyanate methyl) cyclohexane, and an active hydrogen compound; and a step of laminating a base layer comprised of a (thio)urethane resin which is obtained by polymerizing and curing the polymerizable composition over at least one surface of a polarized film to produce a laminated product.
[9] The process for producing a plastic polarized lens according to claim 8, after the step of laminating the base layer, further comprising: a step of applying a hard coat composition over the base layer of the laminated product to form a coated layer; and a step of heating and curing the coated layer at a temperature of 105°C or higher to form a hard coat layer.

In the present invention, the lens includes any one of a lens blank before being subjected to surface finishing, such as a semifinished lens, a plano lens having a refraction degree of zero, and a finished lens having a vision corrective refraction degree.

According to the plastic polarized lens of the present invention, heat resistance is excellent, the occurrence of astigmatism is able to be suppressed not only at a heating temperature at the step of molding but also in a heat treatment step after being molded, and adhesiveness between the hard coat layer and the lens base layer is also excellent.

In addition, according to the process for producing the plastic polarized lens of the present invention, a complicated step is not adopted, the occurrence of astigmatism is able to be suppressed, and a yield of products is able to be improved.

### DESCRIPTION OF EMBODIMENTS

Hereinafter, a plastic polarized lens and a producing method thereof of the present invention will be described with reference to an embodiment.

### <Plastic Polarized lens>

A plastic polarized lens of present embodiment includes a polarized film, and a base layer formed over at least one surface of the polarized film.

### [Polarized film]

Various films such as a polyvinyl alcohol polarized film and a thermoplastic polyester polarized film are able to be used as the polarized film of present embodiment.

Examples of the thermoplastic polyester include polyethylene terephthalate, polyethylene naphthalate, polybutylene terephthalate, and the like, and the polyethylene terephthalate is preferable from the viewpoint of water resistance, heat resistance, and moldability.

Examples of the polarized film include, specifically, a dichroic dye-containing thermoplastic polyester polarized film, an iodine-containing polyvinyl alcohol polarized film, a dichroic dye-containing polyvinyl alcohol polarized film, and the like.

The polarized film may be used after being subjected to a dry treatment and a heat treatment for stability.

Further, in order to improve adhesiveness with respect to a (thio)urethane-based resin, the polarized film is able to be used after being subjected to at least one kind of pretreatments selected from a primer coating treatment, a chemical treatment (a gas chemical treatment or a liquid chemical treatment of alkali or the like), a corona discharge treatment, a plasma treatment, an ultraviolet irradiation treatment, an electron beam irradiation treatment, a roughening treatment, a flame treatment, and the like. Among such pretreatments, at least one kind of pretreatments selected from the primer coating treatment, the chemical treatment, the corona discharge treatment, and the plasma treatment are particularly preferable.

The thickness of the polarized film is generally in a range of 1 to 500 µm, and is preferably in a range of 10 to 300 µm.

### [Base Layer]

The base layer is formed over at least one surface of the polarized film.

The base layer is comprised of a (thio)urethane resin which is obtained from a polymerizable composition containing at least one kind of isocyanate selected from isophorone diisocyanate, bis(isocyanate cyclohexyl) methane, and bis(isocyanate methyl) cyclohexane, and an active hydrogen compound.

In the plastic polarized lens including such a base layer, heat resistance is excellent, the occurrence of astigmatism is able to be suppressed not only at a heating temperature at the step of molding but also in a heat treatment step after being molded.

In present embodiment, specifically, the base layer is obtained by polymerizing and curing the polymerizable composition containing isocyanate and an active hydrogen compound.

### (Isocyanate)

The isocyanate is at least one kind selected from isophorone diisocyanate, bis(isocyanato cyclohexyl) methane, and bis(isocyanato methyl) cyclohexane.

Isophorone diisocyanate is preferably used as the isocyanate, and may be used by being mixed with bis (isocyanato cyclohexyl) methane and bis(isocyanato methyl) cyclohexane.

As necessary, the three kinds of isocyanates described above and other isocyanates may be used by being mixed as the isocyanate.

By using such isocyanate, it is possible to obtain a plastic polarized lens having an excellent balance between heat resistance and suppression of astigmatism.

### (Active Hydrogen Compound)

The active hydrogen compound is a compound having a difunctional or more active hydrogen group, and examples of the active hydrogen compound include polyol, polythiol, thiol having a hydroxy group, and the like. It is preferable that the polyol and the polythiol are used as the active hydrogen compound.

### (Polyol)

The polyol is a compound having two or more hydroxyl groups. Examples of the polyol include aliphatic polyol such as ethylene glycol, diethylene glycol, propylene glycol, dipropylene glycol, tripropylene glycol, butylene glycol, neopentyl glycol, glycerin, trimethylol ethane, trimethylol propane, ditrimethylol propane, butane triol, 1,2-methyl glucoside, pentaerythritol, dipentaerythritol, tripentaerythritol, sorbitol, erythritol, threitol, ribitol, arabinitol, xylitol, allitol, mannitol, dulcitol, iditol, glycol, inositol, hexane triol, triglycerose, diglycerol, triethylene glycol, polyethylene glycol, tris(2-hydroxy ethyl) isocyanurate, cyclobutane diol, cyclopentane diol, cyclohexane diol, cycloheptane diol, cyclooctane diol, cyclohexane dimethanol, hydroxy propyl cyclohexanol, tricyclo[5.2.1.0^{2,6}] decane-dimethanol, bicyclo[4.3.0]-nonane diol, dicyclohexane diol, tricyclo[5.3.1.1] dodecane diol, bicyclo[4.3.0] nonane dimethanol, tricyclo[5.3.1.1] dodecane-diethanol, hydroxy propyl tricyclo[5.3.1.1] dodecanol, spiro[3.4] octane diol, butyl cyclohexane diol, 1,1'-bicyclohexylidene diol, cyclohexane triol, maltitol, and lactose;
aromatic polyol such as dihydroxy naphthalene, trihydroxy naphthalene, tetrahydroxy naphthalene, dihydroxy benzene, benzene triol, biphenyl tetraol, pyrogallol, (hydroxy naphthyl) pyrogallol, trihydroxy phenanthrene, bisphenol A, bisphenol F, xylylene glycol, di(2-hydroxy ethoxy) benzene, bisphenol A-bis-(2-hydroxy ethyl ether), tetrabromobisphenol A, and tetrabromobisphenol A-bis-(2-hydroxy ethyl ether);
halogenated polyol such as dibromoneopentyl glycol; and
polymeric polyol such as an epoxy resin. In present embodiment, at least one kind selected therefrom may be used by being combined.

In addition, other examples of the polyol compound include a condensation reaction product between an organic acid such as an oxalic acid, a glutamic acid, an adipic acid, an acetic acid, a propionic acid, a cyclohexane carboxylic acid, a β-oxocyclohexane propionic acid, a dimer acid, a phthalic acid, an isophthalic acid, a salicylic acid, a 3-bromopropionic acid, a 2-bromoglycol, a dicarboxy cyclohexane, a pyromellitic acid, a butane tetracarboxylic acid, and a bromophthalic acid and the polyol described above;
an addition reaction product between the polyol described above and alkylene oxide such as ethylene oxide or propylene oxide;
an addition reaction product between alkylene polyamine and alkylene oxide such as ethylene oxide or propylene oxide;
bis-[4-(hydroxy ethoxy)phenyl] sulfide, bis-[4-(2-hydroxy propoxy)phenyl] sulfide, bis-[4-(2,3-dihydroxy propoxy)phenyl] sulfide, bis-[4-(4-hydroxy cyclohexyloxy) phenyl] sulfide, bis-[2-methyl-4-(hydroxy ethoxy)-6-butyl phenyl] sulfide and compounds in which three molecules or less of ethylene oxide and/or propylene oxide on average per a hydroxyl group is added to these compounds described above; and
polyol containing a sulfur atom such as di-(2-hydroxy ethyl) sulfide, 1,2-bis-(2-hydroxy ethyl mercapto) ethane, bis(2-hydroxy ethyl) disulfide, 1,4-dithiane -2,5-diol, bis(2,3-dihydroxy propyl) sulfide, tetrakis(4-hydroxy -2-thiabutyl) methane, bis(4-hydroxy phenyl) sulfone (Product Name: Bisphenol S), tetrabromobisphenol S, tetramethyl bisphenol S, 4,4'-thiobis(6-tert-butyl-3-methyl phenol), and 1,3-bis(2-hydroxy ethyl thioethyl)-cyclohexane. In present embodiment, at least one kind selected therefrom may be used by being combined.

### (Polythiol)

The polythiol is a compound having two mercapto groups or more. At least one kind of compounds having two mercapto groups or more is able to be used by being combined as the polythiol.

Examples of the polythiol include an aliphatic polythiol compound such as methane dithiol, 1,2-ethane dithiol, 1,2,3-propane trithiol, 1,2-cyclohexane dithiol, bis(2-mercaptoethyl) ether, tetrakis(mercaptomethyl) methane, diethylene glycol bis(2-mercaptoacetate), diethylene glycol bis(3-mercaptopropionate), ethylene glycol bis(2-mercaptoacetate), ethylene glycol bis(3-mercaptopropionate), trimethylol propane tris(2-mercaptoacetate), trimethylol propane tris(3-mercaptopropionate), trimethylol ethane tris(2-mercaptoacetate), trimethylol ethane tris(3-mercaptopropionate), pentaerythritol tetrakis(2-mercaptoacetate), pentaerythritol tetrakis(3-mercaptopropionate), bis(mercaptomethyl) sulfide, bis(mercaptomethyl) disulfide, bis(mercaptoethyl) sulfide, bis(mercaptoethyl) disulfide, bis(mercaptopropyl) sulfide, bis(mercaptomethylthio) methane, bis(2-mercaptoethylthio) methane, bis(3-mercaptopropylthio) methane, 1,2-bis(mercaptomethylthio) ethane, 1,2-bis(2-mercaptoethylthio) ethane, 1,2-bis(3-mercaptopropylthio) ethane, 1,2,3-tris(mercaptomethylthio) propane, 1,2,3-tris(2-mercaptoethylthio) propane, 1,2,3-tris(3-mercaptopropylthio) propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethyl thiomethyl) methane, tetrakis(2-mercaptoethyl thiomethyl) methane, tetrakis(3-mercaptopropyl thiomethyl) methane, bis(2,3-dimercaptopropyl) sulfide, 2,5-dimercaptomethyl-1,4-dithiane, 2,5-dimercapto-1,4-dithiane, 2,5-dimercaptomethyl-2,5-dimethyl-1,4-dithiane, and ester of a thioglycolic acid and a mercaptopropionic acid thereof, hydroxy methyl sulfide bis(2-mercaptoacetate), hydroxy methyl sulfide bis(3-mercaptopropionate), hydroxy ethyl sulfide bis(2-mercaptoacetate), hydroxy ethyl sulfide bis(3-mercaptopropionate), hydroxy methyl disulfide bis(2-mercaptoacetate), hydroxy methyl disulfide bis(3-mercaptopropionate), hydroxy ethyl disulfide bis(2-mercaptoacetate), hydroxy ethyl disulfide bis(3-mercaptopropionate), 2-mercaptoethyl ether bis(2-mercaptoacetate), 2-mercaptoethyl ether bis(3-mercaptopropionate), thiodiglycolic acid bis(2-mercaptoethyl ester), thiodipropionic acid bis(2-mercaptoethyl ester), dithiodiglycolic acid bis(2-mercaptoethyl ester), dithiodipropionic acid bis(2-mercaptoethyl ester), 1,1,3,3-tetrakis(mercaptomethylthio) propane, 1,1,2,2-tetrakis(mercaptomethylthio) ethane, 4,6-bis(mercaptomethylthio)-1,3-dithiane, tris(mercaptomethylthio) methane, and tris(mercaptoethylthio) methane;
an aromatic polythiol compound such as 1,2-dimercaptobenzene, 1,3-dimercaptobenzene, 1,4-dimercaptobenzene, 1,2-bis(mercaptomethyl) benzene, 1,3-bis(mercaptomethyl) benzene, 1,4-bis(mercaptomethyl) benzene, 1,2-bis(mercaptoethyl) benzene, 1,3-bis(mercaptoethyl) benzene, 1,4-bis(mercaptoethyl) benzene, 1,3,5-trimercaptobenzene, 1,3,5-tris(mercaptomethyl) benzene, 1,3,5-tris(mercaptomethylene oxy) benzene, 1,3,5-tris(mercaptoethylene oxy) benzene, 2,5-toluene dithiol, 3,4-toluene dithiol, 1,5-naphthalene dithiol, and 2,6-naphthalene dithiol; and
a heterocyclic polythiol compound such as 2-methyl amino-4,6-dithiol-sym-triazine, 3,4-thiophene dithiol, bismuthiol, 4,6-bis(mercaptomethylthio)-1,3-dithiane, and 2-(2,2-bis(mercaptomethylthio) ethyl)-1,3-dithietane, and at least one kind thereof may be used.

Further, an oligomer of the polythiol, or a halogen substituent such as a chlorine substituent and a bromine substituent may be used.

Only one kind of active hydrogen compound may be independently used, or two or more kinds thereof may be used by being mixed.

At least one kind selected from pentaerythritol tetrakis(2-mercaptoacetate), pentaerythritol tetrakis(3-mercaptopropionate), bis(mercaptoethyl) sulfide, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 2,5-dimercaptomethyl-1,4-dithiane, 1,1,3,3-tetrakis(mercaptomethylthio) propane, 4,6-bis(mercaptomethylthio)-1,3-dithiane, and 2-(2,2-bis(mercaptomethylthio) ethyl)-1,3-dithiethane is preferably used as the polythiol,
at least one kind selected from pentaerythritol the tetrakis(3-mercaptopropionate), the 4-mercaptomethyl-1,8-dimercapto-3,6-dithiaoctane, the 5,7-dimercaptomethyl-1,11-dimercapto-3,6,9-trithiaundecane, the 4,7-dimercaptomethyl-1,11-dimercapto-3,6,9-trithiaundecane, and the 4,8-dimercaptomethyl-1,11-dimercapto-3,6,9-trithiaundecane is more preferably used, and
the 4-mercaptomethyl-1,8-dimercapto-3,6-dithiaoctane is particularly preferably used.

### (Thiol Having Hydroxy Group)

Examples of thiol having a hydroxy group include 2-mercaptoethanol, 3-mercapto-1,2-propane diol, glycerin bis(mercaptoacetate), 4-mercaptophenol, 2,3-dimercapto-1-propanol, pentaerythritol tris(3-mercaptopropionate), pentaerythritol tris (thioglycolate), and the like, and at least one kind thereof may be used.

In present embodiment, it is preferable that isophorone diisocyanate as the isocyanate and 4-mercaptomethyl-1,8-dimercapto-3,6-dithiaoctane as the active hydrogen compound are used by being combined.

According to the combination, astigmatism is particularly suppressed not only at a heating temperature at the step of molding but also in a heat treatment step after being molded, and adhesiveness between the hard coat layer and the lens base layer is more excellent. That is, a balance in properties thereof is excellent.

Further, in present embodiment, an additive such as a known polymerization catalyst and an internal release agent may be added to the polymerizable composition, according to the purpose.

### (Polymerization Catalyst)

Thiocarbamic acid S-alkyl ester or a known polymerization catalyst used for producing a polythiourethane-based resin, for example, a tin compound may be suitably added as the polymerization catalyst.

Examples of the tin compound include dialkyl tin halogenides such as dibutyl tin dichloride and dimethyl tin dichloride, and dialkyl tin dicarboxylates such as dimethyl tin diacetate, dibutyl tin dioctanoate, and dibutyl tin dilaurate.

In the dialkyl tin halogenides, monoalkyl tin halogenides and trialkyl tin halogenides may be contained. In the dialkyl tin dicarboxylates, monoalkyl tin tricarboxylates and trialkyl tin carboxylates may be included.

Among them, the dialkyl tin halogenides are preferable, dialkyl tin halogenides having an alkyl group having 1 to 4 carbon atoms are more preferable, and specifically, the dialkyl tin halogenides are dibutyl tin dichloride and dimethyl tin dichloride.

In present embodiment, the polymerizable composition is able to contain 0.01 to 1 parts by weight of the tin compound, preferably 0.05 to 0.5 parts by weight of the tin compound, and more preferably 0.1 to 0.3 parts by weight of the tin compound, with respect to total 100 parts by weight of the isocyanate and the active hydrogen compound.

### (Internal Release Agent)

It is preferable that acidic phosphoric acid ester is used as the internal release agent.

The acidic phosphoric acid ester used as the internal release agent is able to be represented by General Formula (1).

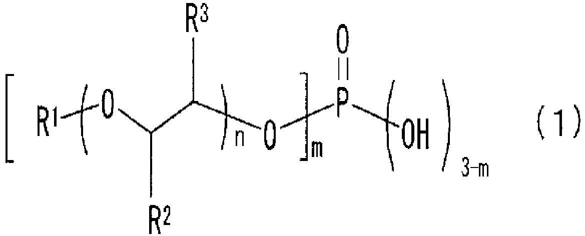

In General Formula (1), m represents an integer of 1 or 2, n represents an integer of 0 to 18, R¹ represents an alkyl group having 1 to 20 carbon atoms, and R² and R³ each independently represent a hydrogen atom, a methyl group, or an ethyl group. It is preferable that the number of carbon atoms in []m is 4 to 20.

In General Formula (1), examples of R¹ include an organic residue derived from a straight chain aliphatic compound such as methane, ethane, propane, butane, pentane, hexane, heptane, octane, nonane, decane, undecane, dodecane, tetradecane, and hexadecane; an organic residue derived from a branched chain aliphatic compound such as 2-methyl propane, 2-methyl butane, 2-methyl pentane, 3-methyl pentane, 3-ethyl pentane, 2-methyl hexane, 3-methyl hexane, 3-ethyl hexane, 2-methyl heptane, 3-methyl heptane, 4-methyl heptane, 3-ethyl heptane, 4-ethyl heptane, 4-propyl heptane, 2-methyl octane, 3-methyl octane, 4-methyl octane, 3-ethyl octane, 4-ethyl octane, and 4-propyl octane; an organic residue derived from an alicyclic compound such as cyclopentane, cyclohexane, 1,2-dimethyl cyclohexane, 1,3-dimethyl cyclohexane, and 1,4-dimethyl cyclohexane; and the like, and at least one kind selected therefrom may be used. Furthermore, examples of R¹ are not limited only to these organic residue derived from exemplified compounds. One of the acidic phosphoric acid ester or a mixture of two or more kinds thereof may be used.

In General Formula (1) described above, it is preferable that n is 0 or 1.

In a case where n is 0, R¹ is preferably a straight chain or branched chain alkyl group having 4 to 12 carbon atoms, and is more preferably a straight chain alkyl group having 4 to 12 carbon atoms.

In a case where n is 1, R¹ is preferably a straight chain or branched chain alkyl group having 1 to 20 carbon atoms, and is more preferably a straight chain or branched chain alkyl group having 3 to 12 carbon atoms.

The acidic phosphoric acid ester may be used as one kind selected therefrom or a mixture of two or more kinds thereof.

ZelecUN (manufactured by Stepan Company), an internal release agent for MR (manufactured by Mitsui Chemicals, Inc.), JP Series manufactured by JOHOKU CHEMICAL CO., LTD., Phosphanol Series manufactured by TOHO Chemical Industry Co., Ltd., AP Series and DP Series manufactured by DAIHACHI CHEMICAL INDUSTRY CO., LTD., and the like may be used as the acidic phosphoric acid ester, and ZelecUN (manufactured by Stepan Company) and the internal release agent for MR (manufactured by Mitsui Chemicals, Inc.) are more preferable.

In present embodiment, the polymerizable composition may contain 0.01 to 0.5 parts by weight of the acidic phosphoric acid ester, and preferably 0.05 to 0.2 parts by weight of the acidic phosphoric acid ester, with respect to total 100 parts by weight of the isocyanate and the active hydrogen compound.

### (Other Component)

In present embodiment, in order to improve various properties, operability, polymerization reactivity, and the like of a (thio)urethane molded product to be obtained, the polymerizable composition may contain one kind or more resin modifiers, in addition to the added components described above, such as an amine compound, an epoxy compound, a thioepoxy compound, an olefin compound, a carbonate compound, an ester compound, metal, a metal oxide or fine particles thereof, for example, organic modified metal (oxide) fine particles, an organic metal compound, and an inorganic product, other than a urethane forming raw material.

In addition, as in a known molding method, various additives such as a chain extender, a cross-linking agent, a light stabilizer, an ultraviolet absorbent, an antioxidant, an oil-soluble dye, a filler, and a bluing agent may be contained according to the purpose.

A triazine-based compound, a benzotriazole-based compound, a benzophenone-based compound, and a benzoate-based compound may be contained as the ultraviolet absorbent. The resin modifier and the additive described above may be suitably added in a stage where a polymerizable composition for an optical material is manufactured.

The polymerizable composition of present embodiment may be prepared by mixing the isocyanate and the active hydrogen compound, and as necessary, the polymerization catalyst, the internal release agent, and the other additives.

In the polymerizable composition, the mole ratio of an NCO group in the isocyanate with respect to the total molar of an OH group and an SH group of the active hydrogen compound (NCO Group /(OH Group + SH Group)) is generally in a range of 0.8 to 1.2, is preferably in a range of 0.85 to 1.15, and is more preferably in a range of 0.9 to 1.1.

In a case where the molar ratio of NCO Group / (OH Group + SH Group) is 0.8 or more, an unreacted OH group or an unreacted SH group does not remain, the composition is sufficiently cured, and thus, a resin having excellent heat resistance, excellent moisture resistance, and excellent light resistance is obtained, and in a case where the ratio of NCO Group / (OH Group + SH Group) is 1.2 or less, the unreacted NCO group does not remain, and thus, a resin having excellent heat resistance, excellent moisture resistance, and excellent light resistance is obtained, and for this reason, it is necessary to increase a reaction temperature in order to reduce the unreacted NCO group, a defect such as coloring is not observed, and thus, the obtained resin is preferable as a resin material.

A temperature in a case where the polymerizable composition is prepared by mixing the isocyanate, the active hydrogen compound, and the other additives, is generally 30°C or lower. There is a case where it is preferable that the temperature is set to a lower temperature from the viewpoint of the pot life of the polymerizable composition. Here, in a case where the solubility of the catalyst, the internal release agent, and the additive with respect to a monomer is not excellent, the catalyst, the internal release agent, and the additive are able to be dissolved in the monomer and the resin modifier after being heated in advance.

A mixing sequence or a mixing method of each component contained in the composition is not particularly limited insofar as each component is able to be homogeneously mixed, and the mixing is able to be performed by a known method. Examples of the known method include a method in which a master batch containing a predetermined amount of additive is prepared, and the master batch is dispersed and dissolved in a monomer or a monomer mixture, and the like.

In present embodiment, at least one kind of coat layers is able to be provided over the base layer.

Examples of the coat layer include a hard coat layer, an anti-reflection layer, a mirror coat layer, an antifog coat layer, a stain-proofing layer, a water repellent layer, and the like, and each of the coat layers is able to be independently used or a plurality of coat layers are able to be used by being multilayered. In a case where the coat layer is provided over both surfaces, the same coat layer may be provided over each of the surfaces, or different coat layers may be provided over each of the surfaces.

In present embodiment, it is preferable that at least one kind of the coat layer is a hard coat layer.

### [Hard Coat Layer]

The hard coat layer is able to impart a function such as scratch resistance, abrasion resistance, moisture resistance, hot water resistance, heat resistance, and weather resistance to the surface of the lens. In order to suppress the occurrence of an interference fringe, it is preferable that a difference between a refractive index of the hard coat layer and a refractive index of the (thio) urethane resin which is the lens base is in a range of ±0.1. The thickness of the hard coat layer is generally in a range of 1 to 40 µm, and is preferably in a range of 2 to 10 µm.

The hard coat composition contains an organic silicon compound having curing properties and at least one kind of oxide fine particles configured of an oxide of an element selected from an element group of Si, Al, Sn, Sb, Ta, Ce, La, Fe, Zn, W, Zr, In, and Ti and/or at least one kind of fine particles configured of a composite oxide of at least two kinds of elements selected from the element group. In present embodiment, it is particularly preferable that the hard coat layer contains oxide fine particles containing an oxide of an element selected from Sn, Ti, and Zr, from the viewpoint of adhesiveness between the hard coat layer and the lens base layer.

Further, it is preferable that at least any one of amines, amino acids, a metal acetyl acetonate complex, an organic acid metal salt, perchloric acids, a salt of perchloric acids, acids, a metal chloride, and a polyfunctional epoxy compound is contained, in addition to the components.

A suitable solvent which does not affect the lens may be used in the hard coat composition, or a solvent may not be used.

According to the hard coat layer obtained by curing the hard coat composition, even in a case where a heating and curing temperature for forming the hard coat layer over a polarized lens comprised of a polarized film and a base layer obtained by polymerizing, specific isocyanate, and an active hydrogen compound is set to be 105°C or higher, and is further set to be 110°C or higher, a hard coat polarized lens is able to be obtained, in which the occurrence of astigmatism is suppressed, and adhesiveness with respect to the base layer is excellent. The upper limit of the heating and curing temperature is suitably set according to the occurrence of astigmatism, a color change in the film, the coloring of the base resin, and the like, and it is possible to set the upper limit to be generally 130°C or lower, and preferably 120°C or lower.

The hard coat composition is applied onto the base by a known method such as an ink jet method, a dipping method, a spin coating method, a spray coating method, a roll coating method, or a flow coating method, and then, the hard coat layer is formed by being heated or by being irradiated with an ultraviolet ray, as a coating and curing method of the hard coat liquid. A dipping method is preferably used as a coating method, and a thermal curing method is preferably used as a curing method.

The polarized film used in the plastic polarized lens is a stretched film, and thus, the polarized film contracts due to heat at the time of forming the hard coat film, and according to this, the lens base is also deformed, and thus, there was a case where astigmatism occurs in the polarized lens after a hard coat step. Furthermore, when the hard coat layer is cured at 100°C or lower which is low temperature to suppress the contraction of the polarized film, there was a case where adhesiveness of the hard coat film decreases. Thus, the adhesiveness of the hard coat film and the suppression of the astigmatism are in a trade-off relationship. Further, in a case of being used under a high humidity condition, there was a room for improvement in the adhesiveness between the lens base layer and the hard coat film.

According to the present invention, the base layer obtained by polymerizing and curing the specific isocyanate and specific active hydrogen compound is provided, and thus, a plastic polarized lens is able to be obtained, in which heat resistance is excellent not only at a heating temperature at the step of molding but also in a heat treatment step after being molded, a balance between the adhesiveness of the hard coat film and the suppression of the astigmatism is excellent. Further, even in a case of being used under a high humidity condition, a plastic polarized lens is able to be obtained, in which the adhesiveness between the lens base layer and the hard coat film is excellent.

Furthermore, a primer layer may be provided over the base layer, and the hard coat composition is able to be applied onto the primer layer.

The primer layer is able to improve adhesiveness between the hard coat layer and the base layer, and is able to improve impact resistance according to the case.

Any material is able to be used in the primer layer insofar as adhesiveness with respect to the obtained lens is high, and in general, a urethane-based resin, an epoxy-based resin, a polyester-based resin, a melanin-based resin, a primer composition containing polyvinyl acetal as a main component, and the like are used. In order to adjust viscosity of the composition, the primer composition may contain a suitable solvent which does not affect a lens. Obviously, the solvent may not be used.

The primer layer is able to be formed by any method of a coating method and a dry method. In a case of using the coating method, the primer composition is applied over the lens by a known coating method such as a spin coating and a dip coating, and then is solidified to form the primer layer. In a case of using the dry method, the primer layer is formed by a known dry method such as a CVD method or a vacuum deposition method. When the primer layer is formed, in order to improve adhesiveness, the surface of the base layer may be subjected to a pretreatment such as an alkali treatment, a plasma treatment, and an ultraviolet treatment, as necessary.

In the plastic polarized lens obtained by the producing method of present embodiment as described above, , it is possible to set an astigmatism value to be 0.05 D or less, and preferably 0.04 D or less.

### <Process for Producing Plastic Polarized lens>

A process for producing a plastic polarized lens of present embodiment includes the following steps.
Step a: A polymerizable composition containing at least one kind of isocyanate selected from isophorone diisocyanate, bis(isocyanate cyclohexyl) methane, and bis(isocyanate methyl) cyclohexane, and an active hydrogen compound is prepared.
Step b: A base layer comprised of a (thio) urethane resin obtained by polymerizing and curing the polymerizable composition obtained in Step a is laminated over at least one surface of the polarized film, to produce a laminated product.

According to the process for producing a plastic polarized lens of present embodiment, it is possible to suppress the occurrence of astigmatism by a combination of specific isocyanate and specific active hydrogen compound, and it is possible to improve a yield of products by a simple method.

In present embodiment, a hard coat layer is able to be formed over the base layer, and the following steps are able to be included.

Step c: A hard coat composition is applied over on the base layer of the laminated product obtained in Step b to form a coated layer.

Step d: The coated layer formed in Step c is heated and cured at a temperature of 105°C or higher to form a hard coat layer.

Hereinafter, each step will be described.

### [Step a]

First, the polymerizable composition containing predetermined isocyanate and the active hydrogen compound described above, and as necessary, other additives is prepared.

A temperature in a case of preparing the polymerizable composition by mixing the components is generally 30°C or lower. There is a case where it is preferable the temperature is set to be a lower temperature, from the viewpoint of the pot life of the polymerizable composition. Here, in a case where solubility of a catalyst, an internal release agent, and an additive with respect to a monomer is not excellent, the catalyst, the internal release agent, and the additive are able to be dissolved in a monomer and a resin modifier by being heated in advance.

A mixing sequence or a mixing method of each component in the composition is not particularly limited insofar as each component is able to be homogeneously mixed, and the mixing is able to be performed by a known method. Examples of the known method include a method in which a master batch containing a predetermined amount of additive is prepared, and the master batch is dispersed and dissolved in a monomer or a monomer mixture, and the like.

### [Step b]

Then, the base layer comprised of the (thio) urethane resin which is obtained by polymerizing and curing the polymerizable composition obtained in Step a is laminated on at least one surface of the polarized film, and thus, a laminated product is manufactured.

In present embodiment, Step b is able to include the following steps.

Step i: In a lens casting mold, the polarized film is fixed in a state where at least one surface of the polarized film is separated from the mold.

Step ii: The polymerizable composition obtained in Step a is injected into space between the polarized film and the mold.

Step iii: The base layer comprised of the (thio)urethane resin which is obtained by polymerizing and curing the polymerizable composition is laminated over at least one surface of the polarized film, and thus, the laminated product is manufactured.

Hereinafter, each step will be sequentially described.

### (Step i)

In the space of the lens casting mold, the polarized film is fixed such that at least one of film surfaces is parallel to a facing mold inner surface.

In general, the lens casting mold is configured of two glass molds having an approximately disk-like shape which are holded by a gasket. In the space of the lens casting mold, the polarized film is fixed such that the film surface is parallel to the facing mold inner surface on a front side. A space is formed between the polarized film and the mold. Furthermore, the polarized film may be shaped in advance.

In order to improve adhesiveness with respect to the (thio)urethane-based resin, the polarized film may be used after being subjected to at least one kind of pretreatments selected from a primer coating treatment, a chemical treatment (a gas chemical treatment or a liquid chemical treatment), a corona discharge treatment, a plasma treatment, an ultraviolet irradiation treatment, an electron beam irradiation treatment, a roughening treatment, a flame treatment, and the like. Among such pretreatments, at least one kind of pretreatments selected from the primer coating treatment, the chemical treatment, the corona discharge treatment, and the plasma treatment are particularly preferable.

### (Step ii)

In Step ii, the polymerizable composition is injected into the space between the polarized film and the mold.

For example, the polymerizable composition is injected into a mold which is holded by a gasket, tape, or the like. At this time, there are many cases where it is preferable that a degassing treatment under reduced pressure, a filtration treatment such as pressurizing or depressurizing, or the like is performed, as necessary, according to physical properties required for a plastic polarized lens to be obtained.

The injection of the polymerizable composition for an optical material into the mold is able to be performed by a known method of the related art, and for example, the injection may be manually performed, or may be performed by using a mixing and injecting machine.

Molds having various shapes are able to be used as the mold of present embodiment insofar as the mold is for preparing the optical material, but the mold is not particularly limited.

### (Step iii)

In Step iii, the polymerizable composition injected into the mole in Step ii is polymerized and cured, and a layer comprised of the (thio)urethane resin is laminated over at least one surface of the polarized film, and thus, the laminated product is manufactured.

Polymerization conditions are different according to the composition of the polymerizable composition, the kind and the use amount of the catalyst, the shape of the mold, and the like, and the polymerizable composition is polymerized at a temperature of 5°C to 140°C for 1 to 50 hours from the viewpoint of the effect of the present invention. According to the case, it is preferable that the polymerizable composition is cured for 1 to 25 hours by being retained in a temperature range of 5°C to 130°C or being gradually heated.

The laminated product which is cured by the polymerization is released from the mold, and thus, the plastic polarized lens of present embodiment is able to be obtained.

In present embodiment, the laminated product after being polymerized and released, as necessary, may be subjected to a heat treatment such as annealing. A treatment temperature is 90°C to 150°C, is preferably 110°C to 130°C, and is more preferably 115°C to 125°C, from the viewpoint of the effect of the present invention. A treatment time is in a range of 1 to 10 hours, and is preferably in a range of 2 to 5 hours, from the viewpoint of the effect of the present invention.

### [Step c]

Next, the hard coat composition is applied over the base layer of the laminated product obtained in Step b, and thus, the coated layer is formed.

A composition which is commercially available as a silicon-based hard coat liquid is able to be used as the hard coat composition. Examples of the composition include CRYSTAL COAT ™C-415, CRYSTAL COAT ™CC-1600, and the like, manufactured by SDC Technologies, LLC.

A known method such as an ink jet method, a dipping method, a spin coating method, a spray coating method, a roll coating method, or a flow coating method is able to be used as a coating and curing method of the hard coat liquid, and the dipping method is preferably used.

Primer coating may be applied over the base layer before applying the hard coat composition over the base.

### [Step d]

In this step, the coated layer formed in Step c is heated and cured at a temperature of 105°C or higher, and preferably at a temperature of 110 °C or higher, and thus, the hard coat layer is formed. The upper limit of the heating and curing temperature is suitably set according to the occurrence of astigmatism, a color change in the film, the coloring of the base resin, and the like, and it is possible to set the upper limit to be generally 130 °C or lower, and preferably 120°C or lower.

A heating and curing time is generally in a range of 15 minutes to 10 hours, and is preferably in a range of 2 to 6 hours.

Preheating is preferably performed at a temperature of 100°C or lower before performing heating and curing at a temperature of 105°C or higher.

In present embodiment, predetermined isocyanate and predetermined active hydrogen compound are used, and the hard coat layer is able to be formed by being heated and cured at a temperature of 105°C or higher, and thus, a plastic polarized lens is able to be obtained, in which adhesiveness with respect to the hard coat film is excellent, and the occurrence of astigmatism is suppressed even in a case of being cured at the temperature described above.

The plastic polarized lens of present embodiment is able to include a coat layer such as an anti-reflection layer, a mirror coat layer, an antifog coat layer, a stain-proofing layer, and a water repellent layer over the hard coat layer. Each of the coat layers is able to be independently used or a plurality of coat layers are able to be used by being multilayered. In a case where the coat layer is provided on both surfaces, the same coat layer may be provided on each of the surfaces, or different coat layers may be provided on each of the surfaces.

Each of the coat layers may be used together with an ultraviolet absorber for protecting lenses or eyes from an ultraviolet ray, an infrared absorber for protecting eyes from an infrared ray, a light stabilizer or an antioxidant for improving weather resistance of the lens, a dye or a pigment, a photochromic dye or a photochromic pigment for increasing fashionability of the lens, an antistatic agent and a known additive for increasing performance of the lens. In a layer which is formed by coating, various leveling agents for improving coating properties may be used.

In general, the anti-reflection layer is formed over the hard coat layer, as necessary. The anti-reflection layer includes an inorganic-based anti-reflection layer and an organic-based anti-reflection layer, and in a case where the anti-reflection layer is the inorganic-based anti-reflection layer, the anti-reflection layer is formed by a dry method such as a vacuum vapor deposition method, a sputtering method, an ion plating method, an ion beam assist method, and a CVD method using an inorganic oxide such as SiO₂ and TiO₂. In a case where the anti-reflection layer is the organic-based anti-reflection layer, the anti-reflection layer is formed by a wet method using an organic silicon compound and a composition including silica-based fine particles having an inner cavity.

The anti-reflection layer is configured of a single layer or a multilayer, and in a case where the anti-reflection layer comprised of a single layer is used, it is preferable that the refractive index of the anti-reflection layer is less than the refractive index of the hard coat layer by at least 0.1 or more. In order to effectively exhibit an anti-reflection function, an anti-reflection film comprised of a multilayer film is preferable, and in this case, a low refractive index film and a high refractive index film are alternately laminated. Even in this case, it is preferable that a difference between the refractive indices of the low refractive index film and the high refractive index film is 0.1 or more. Examples of the high refractive index film include a film of ZnO, TiO₂, CeO₂, Sb₂O₅, SnO₂, ZrO₂, Ta₂O₅, and the like, and examples of the low refractive index film include a SiO₂ film, and the like.

An antifog layer, a stain-proofing layer, and a water repellent layer may be formed on the anti-reflection layer, as necessary. In a method of forming the antifog layer, the stain-proofing layer, and the water repellent layer, a treatment method, a treatment material, and the like are not particularly limited insofar as an anti-reflection function is adversely affected, and a known antifog treatment method, a known stain-proofing treatment method, a known water repellent treatment method, and a known material are able to be used. For example, examples of the antifog treatment method and the stain-proofing treatment method include a method of covering the surface with a surfactant, a method of applying water absorbency to the surface by adding a hydrophilic film, a method of increasing water absorbency by covering the surface with fine concavities and convexities, a method of applying water absorbency by using photocatalyst activity, a method of preventing a water droplet from being attached to the surface by performing a super water repellent treatment, and the like. In addition, examples of the water repellent treatment method include a method of forming a water repellent treatment layer by performing vapor deposition or sputtering using a fluorine-containing silane compound and the like, a method of forming a water repellent treatment layer by dissolving a fluorine-containing silane compound in a solvent, and then by applying the compound onto the surface, and the like.

The plastic spectacle lens using the thiourethane resin of present embodiment may be used by being dyed with a pigment according to the purpose, in order to impart fashionability or photochromic properties.

According to the producing method of present embodiment including the steps described above, it is possible to obtain a plastic polarized lens in which a balance between the adhesiveness of the hard coat film and the suppression of the astigmatism is excellent.

As described above, the embodiment of the present invention has been described, but the embodiment is an example of the present invention, and various configurations other than the configuration described above are able to be adopted.

### [Examples]

Hereinafter, the present invention will be described in detail with reference to examples.

### <Performance Evaluation>

- Astigmatism Value: An astigmatism value was measured by FOCOVISION SR-2 (manufactured by Automation&Robotics). The average value of three polarized lenses was set to an astigmatism value.
- Adhesiveness: By leaving a polarized lens at a temperature of 60°C/ a humidity of 90% for 240 hours, moisture resistant exposure test was conducted. Then, adhesiveness was evaluated on a convex surface of a plastic polarized lens before the moisture resistant exposure test and the convex surface of the plastic polarized lens after the moisture resistant exposure test (the evaluation of the convex surface before a moisture resistant exposure test is set to adhesiveness 1, and the evaluation of the convex surface after the moisture resistant exposure test is set to adhesiveness 2). Specifically, 100 grids formed in a hard coat surface of the polarized lens by making cut lines having a depth of approximately 1 mm at the surface of the polarized lens using a cutter, and an operation of strongly attaching adhesive tape (CT-24) manufactured by Nichiban Co., Ltd. onto the grids and then rapidly peeling off the adhesive tape therefrom was repeated five times. According to the operation, a ratio of grids which maintained adhesiveness without being peeled off to the entire grids was visually evaluated by using a magnifying lens.

### [Example 1]

### (Pretreatment of Polarized film)

A commercially available dichroic dye-containing PVA polarized film (a thickness of approximately 40 µm), which is subjected to 6 curve (6c) treatment, was dried at 60°C for 24 hours or longer, and then, was heated at 120°C for 2 hours in a hot air circulating type oven.

### (Producing of Polarized lens)

56.14 parts by weight of isophorone diisocyanate, 43.86 parts by weight of 4-mercaptomethyl-1,8-dimercapto-3,6-dithiaoctane, 0.2 parts by weight of dimethyl tin dichloride as a polymerization catalyst, 0.1 parts by weight of Zelec UN (Registered Trademark, manufactured by Stepan Company) as a release agent, and 1.5 parts by weight of Seesorb 709 (manufactured by SHIPRO KASEI KAISHA, LTD.) as an ultraviolet absorbent were stirred and dissolved, and then, were subjected to a degassing treatment under reduced pressure, and thus, a monomer mixture for injection was obtained.

Next, the monomer mixture for injection was filtered through a filter of 3 micronmeters, and then injected into two spaces in a lens casting mold which are partitioned by two glass molds (a glass mold set including a front surface 6C/a back surface 6C) and the polarized film which had been subjected to the treatment described above through a tube. At this time, the minimum distance between the two glass molds was 12 mm, the narrowest distance (a distance between the convex surface of the lens and the polarized film) was approximately 0.5 mm.

The lens casting mold which was sealed after injecting the monomer thereinto was placed in an air circulating type oven with a freezing machine, was heated from 10°C to 120°C for 30 hours, and then, was maintained at 120°C for 2 hours, was gradually cooled, and then, the lens casting mold was taken out from the oven. The lens was released from the lens casting mold, and was annealed at 120°C for 2 hours, and thus, a polarized lens was obtained.

### (Formation of Hard Coat Layer)

The obtained polarized lens was etched with alkali, and a hard coat liquid of CRYSTAL COAT ™C-415 (manufactured by SDC Technologies, LLC) was applied onto the polarized lens by a dipping method. A pulling speed was 20 cm/min. The hard coat liquid was dried with air, and then, a hard coat coated-layer was cured in an oven at 115°C for 4 hours, and thus, a hard coat polarized lens was obtained. The thickness of the hard coat layer of the obtained lens was approximately 4 µm.

### <Evaluation Result>

The evaluation result of the obtained hard coat polarized lens was shown in Table-1.

### [Example 2]

A hard coat polarized lens was obtained by the same operation as that in Example 1 except that the curing temperature of the hard coat coated-layer was changed from 115°C to 110°C.

### [Example 3]

A hard coat polarized lens was obtained by the same operation as that in Example 1 except that the hard coat liquid was changed from CRYSTAL COAT ™C-415 to CRYSTAL COAT ™CC-1600 (manufactured by SDC Technologies, LLC).

### [Example 4]

A hard coat polarized lens was obtained by the same operation as that in Example 2 except that the hard coat liquid was changed from CRYSTAL COAT ™C-415 to CRYSTAL COAT ™CC-1600 (manufactured by SDC Technologies, LLC).

### [Example 5]

A hard coat polarized lens was obtained by the same operation as that in Example 1 the curing temperature of the hard coat coated-layer was changed from 115°C to 105°C.

### [Comparative Example 1]

A hard coat polarized lens was obtained by the same operation as that in Example 1 except that the monomer mixture for injection was changed to 50.7 parts by weight of a mixture of 2, 5-bis (isocyanate methyl)bicyclo[2.2.1] heptane and 2,6-bis(isocyanate methyl)bicyclo[2.2.1] heptane, 22.7 parts by weight of 4-mercaptomethyl-1,8-dimercapto-3,6-dithiaoctane, 26.6 parts by weight of pentaerythritol tetrakis(3-mercaptopropionate), 0.05 parts by weight of dibutyl tin dichloride as the polymerization catalyst, 0.2 parts by weight of Zelec UN (Registered Trademark, manufactured by Stepan Company) as the release agent, and 1.5 parts by weight of Seesorb 709 (manufactured by SHIPRO KASEI KAISHA, LTD.) as an ultraviolet absorbent.

### [Comparative Example 2]

A hard coat polarized lens was obtained by the same operation as that in Comparative Example 1 except that the hard coat liquid was changed from CRYSTAL COAT ™C-415 to CRYSTAL COAT ™CC-1600 (manufactured by SDC Technologies, LLC).

### [Comparative Example 3]

A hard coat polarized lens was obtained by the same operation as that in Example 1 except that the monomer mixture for injection was changed to 50.6 parts by weight of m-xylylene diisocyanate, 49.4 parts by weight of a mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane, 0.01 parts by weight of dibutyl tin dichloride as the polymerization catalyst, 0.2 parts by weight of Zelec UN (Registered Trademark, manufactured by Stepan Company) as the release agent, and 1.5 parts by weight of Seesorb 709 (manufactured by SHIPRO KASEI KAISHA, LTD.) as the ultraviolet absorbent.

### [Comparative Example 4]

A hard coat polarized lens was obtained by the same operation as that in Comparative Example 3 except that the curing temperature of the hard coat coated-layer was changed from 115°C to 105°C.

A performance evaluation result is shown in Table-1.

**Table-1**

| | Base (Monomers) | Hard Coat Liquid | Curing Conditions of Coated Layer | Astigmatism Value | Adhesiveness 1 (%) | Adhesiveness 2 (%) |
|---|---|---|---|---|---|---|
| Example 1 | a1,b1 | C-415 | at 115ºc for 4 Hours | 0.04 D | 100 | 100 |
| Example 2 | a1,b1 | C-415 | at 110ºc for 4 Hours | 0.05 D | 100 | 96 |
| Example 3 | a1,b1 | CC-1600 | at 115ºc for 4 Hours | 0.05 D | 100 | 100 |
| Example 4 | a1,b1 | CC-1600 | at 110ºc for 4 Hours | 0.04 D | 100 | 100 |
| Example 5 | a1,b1 | C-415 | at 105ºc for 4 Hours | 0.01 D | 100 | 92 |
| Comparative Example 1 | a2,b1,b2 | C-415 | at 115ºc for 4 Hours | 0.08 D | 100 | 100 |
| Comparative Example 2 | a2,b1,b2 | CC-1600 | at 115ºc for 4 Hours | 0.11 D | 100 | 100 |
| Comparative Example 3 | a3,b3 | C-415 | at 115ºc for 4 Hours | 0.07 D | 100 | 88 |
| Comparative Example 4 | a3,b3 | C-415 | at 105ºc for 4 Hours | 0.02 D | 100 | 80 |

| | | | | | | |
|---|---|---|---|---|---|---|
| a1: Isophorone Diisocyanate a2: Mixture Of 2,5-Bis(Isothiocyanato methyl)Bicyclo[2.2.1] Heptane and 2,6-Bis(Isothiocyanato methyl)Bicyclo[2.2.1] Heptane a3: m-Xylylene Diisocyanate b1: 4-Mercaptomethyl-1,8-Dimercapto-3,6-Dithiaoctane b2: Pentaerythritol Tetrakis(3-Mercaptopropionate) b3: Mixture of 5,7-Dimercaptomethyl-1,11-Dimercapto-3,6,9-Trithiaundecane, 4,7-Dimercaptomethyl-1,11-Dimercapto-3,6,9-Trithiaundecane, and 4,8-Dimercaptomethyl-1,11-Dimercapto-3,6,9-Trithiaundecane Adhesiveness 1: Adhesiveness Test on Convex Surface of Polarized lens before Moisture Resistant Exposure Test Adhesiveness 2: Adhesiveness Test on Convex Surface of Polarized lens after Moisture Resistant Exposure Test | | | | | | |

This application claims priority on the basis of Japanese Patent Application No. 2014-161312, filed on August 7, 2014, and the entire disclosure thereof is incorporated herein.

## Claims

1. A plastic polarized lens, comprising:
a polarized film; and
a base layer formed over at least one surface of the polarized film,
wherein the base layer is comprised of a (thio)urethane resin obtained from at least one kind of isocyanate selected from isophorone diisocyanate, bis(isocyanate cyclohexyl) methane, and bis (isocyanate methyl) cyclohexane, and an active hydrogen compound.

2. The plastic polarized lens according to claim 1,
wherein the active hydrogen compound is polyol or polythiol.

3. The plastic polarized lens according to claim 2,
wherein the polythiol is 4-mercaptomethyl-1,8-dimercapto-3,6-dithiaoctane.

4. The plastic polarized lens according to any one of claims 1 to 3,
wherein the isocyanate contains isophorone diisocyanate.

5. The plastic polarized lens according to any one of claims 1 to 4, further comprising:
at least one kind of coat layers over the base layer.

6. The plastic polarized lens according to claim 5, wherein at least one kind of the coat layer is a hard coat layer.

7. The plastic polarized lens according to any one of claims 1 to 6,
wherein astigmatism thereof is 0.05 D or less.

8. A process for producing a plastic polarized lens, comprising:
a step of preparing a polymerizable composition containing at least one kind of isocyanate selected from isophorone diisocyanate, bis(isocyanate cyclohexyl) methane, and bis(isocyanate methyl) cyclohexane, and an active hydrogen compound; and
a step of laminating a base layer comprised of a (thio) urethane resin which is obtained by polymerizing and curing the polymerizable composition over at least one surface of a polarized film to produce a laminated product.

9. The process for producing a plastic polarized lens according to claim 8, after the step of laminating the base layer, further comprising:
a step of applying a hard coat composition over the base layer of the laminated product to form a coated layer; and
a step of heating and curing the coated layer at a temperature of 105°C or higher to form a hard coat layer.
